# EUROPEAN PATENT SPECIFICATION

(11) **EP 4 548 020 B1**
(45) Date of publication and mention of the grant of the patent: **04.11.2026**
(21) Application number: 23745291.7
(22) Date of filing: 19.06.2023
(51) Int. Cl.: F24H 1/18, F24H 15/225, F24H 15/37

(54) **A METHOD OF CONTROLLING A HEATER OF A WATER HEATER AND A WATER HEATER ASSEMBLY**
VERFAHREN ZUR STEUERUNG EINES HEIZERS EINES WASSERHEIZERS UND WASSERHEIZERANORDNUNG
PROCÉDÉ DE COMMANDE D'UN DISPOSITIF DE CHAUFFAGE D'UN CHAUFFE-EAU ET ENSEMBLE DE CHAUFFE-EAU

(30) Priority: 30.06.2022 NO 20220745
(43) Date of publication of application: 07.05.2025
(73) Proprietor: OSO Technology AS, 3300 Hokksund (NO)
(72) Inventor: RIIS, Stein Arne, 3055 Krokstadelva (NO)
(74) Representative: Bryn Aarflot AS
(86) International application number: PCT/NO2023/050144
(87) International publication number: WO 2024/005645

(56) References cited:
- EP-B1- 1 993 183
- WO-A1-94/06191
- US-A1- 2019 391 606
- US-B2- 9 927 131

## Description

### Technical Field

The present invention relates to a water heater assembly with a novel configuration of the heater control. In particular, the invention relates to a water heater assembly configured for providing benefits for the user and for the utility company.

### Background Art

It is well known to provide electric loads, such as water heaters, EV chargers (electric vehicle chargers), air conditioners, and heaters, with controllers that govern the use of electricity according to the instant energy cost. For instance, modern EV chargers will charge the vehicle when the energy cost is low, often during the night when other power consumption is low.

It is also known to control the energy consumption based on the grid voltage. Such a solution is disclosed in publication US9927131 B2, which presents a solution for controlling a water heater. The aim of this solution is to adapt the energy consumption to periods with excessive energy production, produced by distributed generation (DG) sources. DG sources are typically solar panels and wind turbines. By consuming electric energy, i.e. heating the water in water heaters, when such DG sources produce much power, an overload of the grid can be avoided. The water heater disclosed in US9927131 B2 is inclined to consume power if the grid voltage is above a preset standard voltage value but will not avoid consuming power if hot water is consumed in periods where grid voltage is below the said standard voltage. Regardless of the measured grid voltage, the water heater will always maintain a certain amount of water with a temperature above a certain temperature. Moreover, the water heater will avoid heating water to an excessive temperature.

While US9927131 B2 seeks to avoid an overload of the power grid caused by DG sources, another problem sometimes occurring is voltage drops at locations remote from the source transformer.

Publication US2019391606A1 discloses a solution for monitoring hot water supply in a load control network, wherein a multi-meter has an electrical supply input and an electrical supply output to a power supply circuit of a water heater.

EP1993183B1 presents a power system stabilizing system for stabilizing the power of a regional power supply system with natural energy power generation.

Furthermore, WO9406191A1 relates to a power controller device for controlling power to a resistive load, such as a water heater. The power controller device is programmed to output predetermined power levels or to energize the load to predetermined temperatures during predetermined time intervals. The device can use power when power demands are low, while use less power when power demand is high.

Several households and other consumers are typically connected to one common supply line that delivers power from a source transformer. The transformer is normally a step-down transformer that lowers the voltage to common appliance voltage. Such voltage can typically be 120 V or 230 V, depending on the power system in question. In a situation where many loads are consuming power from the supply line simultaneously, the voltage on the supply line remote from the source transformer may become too low. I.e. the consumers close to the transformer may receive normal voltage, while the remote consumers receive low voltage.

An object of the present invention may be to provide a water heater assembly that can alleviate this problem.

An object of the present invention may also be to provide a water heater assembly that avoids large, abrupt changes in power consumption along a supply line.

An object of the invention may be to help the utility with preserving local delivery quality in cases where a Transmission System Owner want to activate distributed energy resources for aggregated balancing services

An object of the invention may be to help the utility with preserving local delivery quality when other distributed loads are optimized solely based on price signal.

An object of the invention may be to allow multiple distributed energy resources (DER) to cost-optimize for each consumer without disrupting the local grid.

An object of the invention may be to help utilities build and maintain their grid in a more cost effective way.

### Summary of invention

According to a first aspect of the present invention, there is provided a method of controlling a heater of a water heater assembly that comprises a water tank and the heater. The method comprises the following steps:
a) with a voltage meter, monitoring an input line voltage;
b) with an energy level monitoring arrangement, monitoring an energy level of the water tank;
c) with a control unit, determining whether the input line voltage is
   - above an upper voltage limit;
   - between a lower voltage limit and the upper voltage limit; or
   - below the lower voltage limit;
d) with the control unit, determining whether the energy level is
   - above a maximum energy level;
   - between a normal energy level and the maximum energy level;
   - between a minimum energy level and the normal energy level; or
   - below the minimum energy level;
      and,
e) based on the monitoring and determinations in steps a) to d),

run the heater if
   i) the measured line input voltage is above an upper voltage limit and the energy level is below a maximum energy level;
   ii) the measured line input voltage is between a lower voltage limit and the upper voltage limit, and the energy level is below a normal energy level;
   iii) the energy level is below a minimum energy level;
and refrain from running the heater if
   iv) the energy level is above the maximum energy level;
   v) the measured input line voltage is between the lower voltage limit and the upper voltage limit, and the energy level is above the normal energy level.
   vi) the measured input line voltage is below the lower voltage limit and the energy level is above the minimum energy level.

Depending on the specific embodiment, the lower voltage limit and the upper voltage limit can be preset or can be calculated based on input line voltage measurements performed over time.

The skilled person will appreciate that the control unit may be various types of units, such as a microprocessor or a computer. It will also be clear that instead of one unit, there may be more control units. For instance, the said determinations may be performed by different units and even units that are physically apart. For instance, one control unit may be physically arranged in association with the water tank, while another control unit may be located on a remote location, such as a server connected to Internet. In embodiments having only one control unit, that control unit may also be remote from the water tank.

With the said method, as will also be discussed later, one will avoid (if possible) tapping power from a supply line, to which the water heater assembly is connected, if the input voltage becomes too low. This will contribute to avoiding even further voltage drops further down the supply line, remote from a source transformer.

Step b) above may involve measuring the energy level by means of an energy level monitoring arrangement that comprises a plurality of temperature gauges distributed vertically. In this manner, a relatively accurate energy level can be measured, as will be discussed further below. This enables measurement of warm water consumption, which can be used for optimizing the above parameters (minimum and maximum energy level).

Furthermore, this makes it possible to, in a situation with low voltage, await running the heater. The control unit can predict that the water heater will need e.g. two hours for heating. The heating can thus be postponed according to tracked earlier consumption patterns.

Moreover, by combining the two sets of parameters in the said manner (namely the energy level and the input line voltage), one obtains a more flexible use of the water heater assembly as a means for maintaining a stable voltage on the supply line. Moreover, it can make use of only one heater instead of two or more more applicable.

In some embodiments, the method further comprises the following steps:
f) with the voltage meter (the one mentioned above or another one), performing a plurality of line voltage measurements over time;
g) storing a plurality of line voltage measurement values in a memory unit;
h) with a calculation unit, calculating, based on the plurality of line voltage measurement values, the lower voltage limit and the upper voltage limit.

As the skilled reader will appreciate, these method steps will be performed in embodiments where the said upper and lower voltage limits are calculated. Moreover, the calculation unit will typically be a part of the control unit or may be the control unit itself.

Moreover, the method may further comprise the following steps:
j) with the energy level monitoring arrangement, performing a plurality of energy level measurements over time;
k) storing a plurality of energy level measurement values in a memory unit;
l) with a calculation unit, calculating, based on the plurality of energy level measurement values, the normal energy level and the minimum energy level.

Again, the calculation unit will typically be a part of the control unit or may be the control unit itself.

While the normal energy level and/or the minimum energy level can be preset levels, they can thus also be calculated levels. Typically, if they are calculated levels, they can be calculated based on previous use of the water tank assembly. Thus, for instance, a water tank where a user uses small amounts of water at a time (e.g. taking seldom and short showers) can have a low calculated minimum energy level. Oppositely, a water heater assembly where much warm water is removed (e.g. a large family using much warm water) will have a higher calculated minimum energy level. The object is to maintain the water heater assembly prepared to deliver the required amount of heated water, however without consuming more electric power than necessary. Moreover, a further object is to make the water heater assembly prepared to receive electric power when the monitored line input voltage is above the upper voltage level. If the energy level is low at such instances, it will be possible to dump more electric power in the water tank. Thus, by allowing a water heater assembly to have a low calculated minimum energy level, the water heater assembly is well suited to receive much electric power if the voltage level is above the upper voltage level, in which case it is advantageous to receive power from the supply line.

In some embodiments, step e) further comprises, with a delay unit, delaying the switching from non-running modes (iv, v, vi) where the heater is not run, to running modes (i, ii, iii) where the heater is run.

By delaying the switching of the heater in this manner, one avoids abrupt load variations that could occur if several heaters were turned on simultaneously. A plurality of water heater assemblies being programmed in a similar fashion, could at certain conditions switch their heaters simultaneously without such a delay function.

Preferably, the delay unit is also used when switching from the running modes to the non-running modes, thereby reducing abrupt, simultaneous removal of power consumption.

In some embodiments, the delay unit is a randomized delay unit. In such embodiments, the delay time provided by the delay unit will be random. This randomized time will advantageously be within a preset time interval, i.e. between a lower and an upper time limit.

According to a second aspect of the present invention, there is provided a water heater assembly comprising a water tank configured to accommodate heated water, a heater configured to heat water inside the water tank, an energy level monitoring arrangement configured to measure the energy level of the water tank, a control unit, and a line input voltage meter.
According to the second aspect of the invention, the control unit is configured to run the heater when
i) the measured line input voltage is above an upper voltage limit and the energy level is below a maximum energy level;
ii) the measured line input voltage is between a lower voltage limit and the upper voltage limit, and the energy level is below a normal energy level;
iii) the energy level is below a minimum energy level;
and the control unit is configured to refrain from running the heater when
iv) the energy level is above the maximum energy level;
v) the measured input line voltage is between the lower voltage limit and the upper voltage limit, and the energy level is above the normal energy level;
vi) the measured input line voltage is below the lower voltage limit and the energy level is above the minimum energy level.

The line input voltage meter may in some embodiments be part of the control unit. In other embodiments, it may be an external voltage meter. For instance, the voltage meter can be arranged in a fuse box, such as typically used in houses receiving power from a supply line. Moreover, such voltage meters can be incorporated in a so-called AMS meter (automatic meter system).

Correspondingly, the memory unit may in some embodiments be incorporated in the control unit. However, it is also possible to apply an external memory unit that communicates with the control unit.

In some embodiments of the second aspect of the invention, the water heater assembly further comprises a memory unit and a calculation unit, wherein the memory unit is configured to store a set of measured voltage values. Moreover, the calculation unit is in such embodiments configured to, based on the set of measured voltage values, calculate the lower voltage limit and the upper voltage limit, wherein the calculated values of the lower and upper voltage limits are dependent on the set of measured voltage values.

In some embodiments, the water heater assembly further comprises a delay unit, configured to delay the switching on and/or the switching off of the heater. The delay unit can advantageously be a randomized delay unit, as discussed above.

The water heater assembly can in some embodiments further comprise a price-optimalisation unit, and the control unit can be configured to, when the line input voltage is between the lower voltage limit and the upper voltage limit, run the heater based on input from the price-optimalisation unit.

In other terms, the control unit employs information about the price for electric power to decide when the heater shall be run. In this manner the user or owner of the water heater assembly is enabled to automatically govern the power consumption to consume electric power when the price is low.

As the skilled reader will appreciate, the delay unit may be implemented as software.

### Detailed description of the invention

While various features of the invention have been discussed in general terms above, a more detailed and non-limiting example of embodiment will be presented in the following with reference to the drawings, in which
- Fig. 1: is a schematic diagram of a source transformer supplying power to a supply line, to which several consumers, such as water heater assemblies, are connected;
- Fig. 2: is a schematic illustration of a water heater assembly;
- Fig. 3a and Fig. 3b: are principle diagrams showing a plurality of voltage measurements performed over time, and resulting calculated values for upper and lower voltage limits;
- Fig. 4a and Fig. 4b: schematically illustrate the water tank energy level and the input line voltage parameters;
- Fig. 5: is a logic diagram illustrating when the heater is run and not run, based on the parameters depicted in Fig. 4a and Fig. 4b; and
- Fig. 6: is a flow-chart illustrating a possible way of performing the method discussed herein.

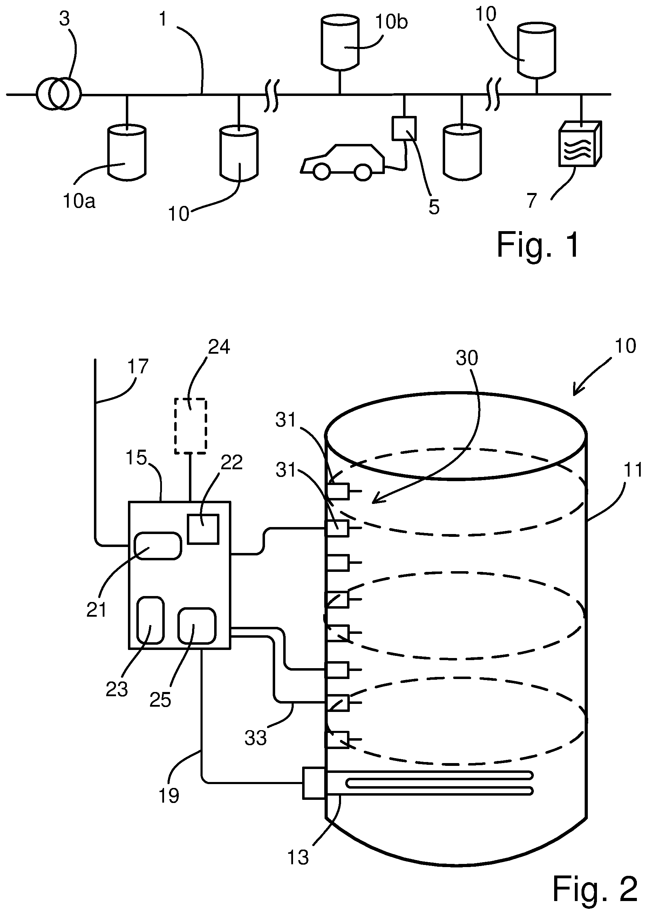

Fig. 1 depicts a schematic diagram of a supply line 1 configured to provide electric power to several consumers connected to it. The supply line 1 is powered via a source transformer 3, which typically is a step-down transformer. The consumers may be various types of loads, such as water heater assemblies 10, 10a, 10b, electric vehicle chargers 5 or a common resistive electric heater 7. As previously discussed, when many of the loads consume power simultaneously, the voltage remote from the source transformer 3 may drop excessively. Thus, in such situations, the loads that are arranged remote from the source transformer 3 may not receive the rated voltage.

When water inside a water heater tank is heated, the water will remain warm for a significant period of time, as the tank is insulated. By avoiding heating of water simultaneously with power consumption in other loads, the problem of voltage drop at the remote portion of the supply line may be avoided or at least reduced.

Fig. 2 schematically depicts a water heater assembly 10 according to the present invention. It comprises a water tank 11 and a heater 13. The heater 13 is a resistive electric heater, as commonly used with water heaters.

Although not shown in Fig. 2, the water tank 11 will typically be provided with an inlet pipe supplying non-heated water to the lower portion of the water tank, and an outlet pipe configured to guide heated water from the upper portion of the water tank 11. Moreover, the water tank 11 will be thermally insulated.

The water heater assembly 10 further comprises a control unit 15. The control unit 15 is connected to an input line 17, through which the water heater assembly 10 receives electric power, such as from the supply line 1 shown in Fig. 1. Extending between the control unit 15 and the heater 13 is a heater line 19, by means of which the control unit 15 can actuate, i.e. run, the heater 13. The control unit 15 thus governs when the heater 13 is run.

In the shown embodiment, the control unit 15 comprises a line input voltage meter 21. The line input voltage meter 21 is configured to measure the voltage on the input line 17, which corresponds to the voltage on the supply line 1. The skilled person will appreciate that in other embodiments, the voltage meter 21 may be a separate component that is not incorporated in the control unit 15 but which still may provide information about the voltage at the location of the water heater assembly 10.

Moreover, the control unit 15 has, in the shown embodiment, a memory unit 23 and a calculation unit 25. The memory unit 23 is configured to store measured values of the voltage. The calculation unit 25 is configured to calculate a voltage band, which will be discussed further below.

Again, the skilled person will realize that in other embodiments, the memory unit 23 and/or the calculation unit 25 may be components separate from the control unit 15. Typically, for such alternative embodiments a wireless or wired communication means will be provided to enable the calculation of the said voltage band.

Still referring to Fig. 2, the water heater assembly 10 further comprises a plurality of temperature gauges 31. The temperature gauges 31 are part of an energy level monitoring arrangement 30, by means of which the energy level Et of the water tank 11 can be calculated and monitored.

As indicated with the schematic illustration of Fig. 2, the temperature gauges 31 are vertically distributed. As the skilled person knows, water inside the water tank 11 will stratify according to temperature. Thus, the warmest water will take the upper portion of the water tank 11, while the coldest water will be located at the lowermost part of the water tank 11. Notably, a relatively high temperature gradient may exist along the vertical direction inside the water tank 11. Hence, measuring merely the temperature at the upper portion and at the lower portion of the water tank 11 will not provide an accurate measure of the thermal energy stored in the water tank 11. The stratification of the water is indicated with the dashed lines.

The number of temperature gauges 31 may vary according to the vertical dimension of the water tank 11. However, the water heater assembly 10 will typically comprise at least three vertically distributed temperature gauges 31.

The respective temperature gauges 31 are connected to the control unit 15 through temperature gauge lines 33 (for simplicity, only some of the temperature gauge lines are indicated in the schematic drawing of Fig. 2).

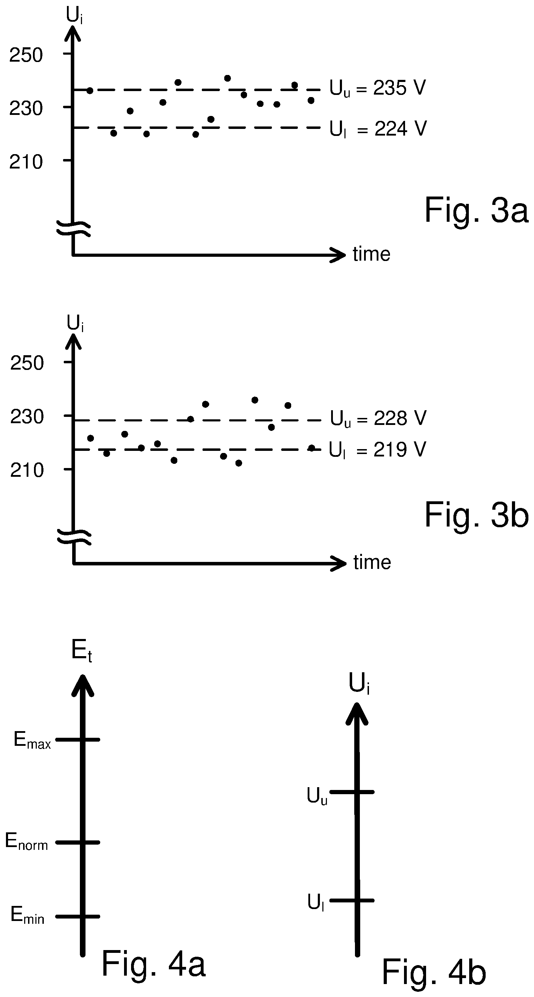

Reference is now made to Fig. 3a and Fig. 3b. These diagrams illustrate measured line input voltage values, as measured by the voltage meter 21 of a respective control unit 15. Fig. 3a illustrate an example of voltage values measured by the voltage meter 21 of a first water heater assembly 10a as shown in Fig. 1. Correspondingly, Fig. 3b illustrates measured line input voltage values measured by the voltage meter 21 of a second water heater assembly 10b. As illustrated in Fig. 1, the first water heater assembly 10a is closer to the source transformer 3 than the second water heater assembly 10b. Moreover, as shown in the example diagrams of Fig. 3a and Fig. 3b, the average voltage measured closer to the source transformer 3 is higher than the average voltage measured at the more remote location.

On the basis of the measured voltage values, the control unit 15 calculates an upper voltage limit Uᵤ and a lower voltage limit Uₗ. The upper and lower voltage limits Uᵤ, Uₗ, define the aforesaid voltage band.

As appears from the diagrams of Fig. 3a and Fig. 3b, the voltage band shown in Fig. 3a is located above the voltage band shown in Fig. 3b, although with some overlap in the present example.

While the upper and lower voltage limits Uᵤ, Uₗ are, as said, calculated on the basis of the measured voltage values, there are various ways to calculate them.

In one embodiment, all the measurements are split into an upper and a lower quartile (though extreme values may be ignored), and the respective upper and lower voltage limits Uᵤ, Uₗ are calculated such that they define these quartiles.

In other embodiments, the measured values may be divided in another fashion.

As briefly introduced above, by means of the energy level monitoring arrangement 30, the control unit 15 calculates the energy level Et of the water tank 11. As the skilled reader will appreciate, the energy level Et depends on the temperature of the water inside the water tank 11. Due to the aforementioned stratification of water of different temperatures it is, however, not sufficient to measure the temperature at only the upper part or at the upper and lower part only. While a shallow layer of warm water may exist in the upper part of the water tank 11, significantly cooler water may exist immediately below that layer. Hence, if having merely an upper and a lower temperature gauge 31, one is not able to accurately calculate the energy level Eₜ. Hence, at least three temperature gauges 31, and preferably more than three, should be provided to the water tank 11.

The control unit controls the heater 13 partly based on the measured and calculated energy level Et of the water tank 11. Three energy level limits are determined by the control unit or are preset, such as by the manufacturer or vendor. These energy level limits include a maximum energy level Eₘₐₓ, a normal energy level Eₙₒᵣₘ, and a minimum energy level Eₘᵢₙ.

The maximum energy level Eₘₐₓ is the highest energy level that the water tank 11 shall be exposed to. Thus, the control unit 15 will ensure that the heater 13 is never run or operated if the water tank energy level Et is at or above this value. This will protect the water tank 11 from over-heating.

The minimum energy level Eₘᵢₙ is, on the other hand, an energy level below which the energy level Et shall never drop. Hence, if the measured or calculated energy level Et drops below this energy level limit, the control unit will actuate the heater 13 to increase the energy level Et. This ensures that the water heater assembly 10 is always prepared to supply heated water to a water consumer.

The normal energy level Eₙₒᵣₘ is an energy level of the water tank 11 which will be used by the control unit 15 in deciding if the heater 13 shall be actuated depending on the measured line input voltage Ui.

The two parameters with the two sets of limits introduced and discussed above are used as a basis for controlling the water heater 13 with the control unit 15. These parameters are schematically depicted in Fig. 4a and Fig. 4b, which illustrate the water tank energy level Eₜ, and the line input voltage Ui. The limits are also schematically indicated.

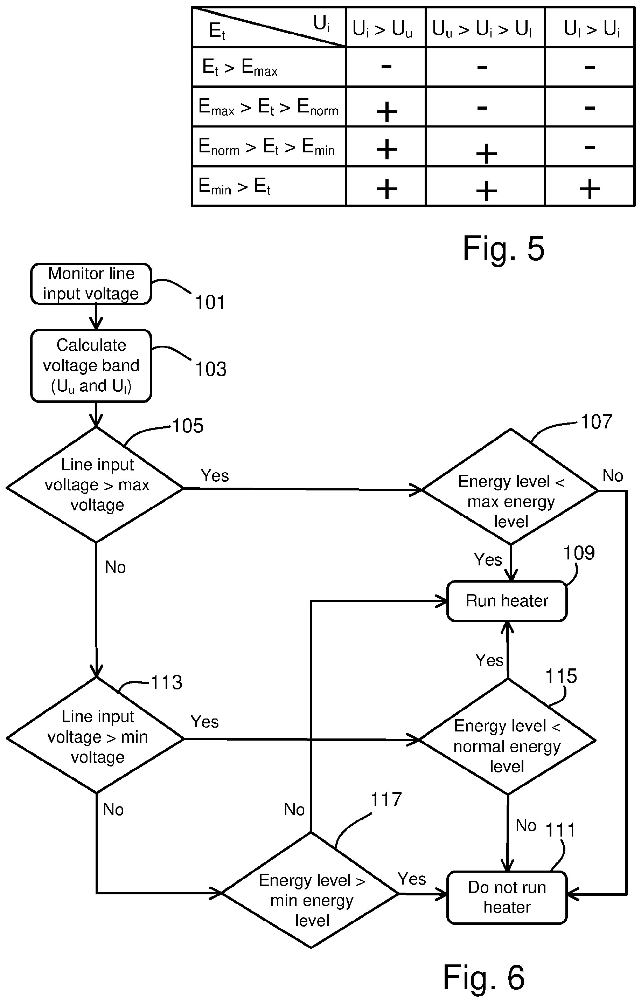

Fig. 5 is a table presenting the rules for controlling the heater 13. Furthermore, Fig. 6 is a flowchart depicting a method of controlling the heater 13 with the control unit 15. The logic diagram or table shown in Fig. 5 corresponds with this flowchart. The minus sign (-) represents non-running modes, when the heater 13 is not run (i.e. not receiving electric power). The plus sign (+) represents running modes, when the heater 13 is run.

In Fig. 6, the line input voltage Ui is measured in block 101. The measurements are performed over a time period. For some embodiments and memory units, the time period can be for instance in the range of 6 hours to several days, for instance seven days.

When a plurality of voltage measurements have been performed, the calculation unit 25 is applied to calculate, in block 103, the lower voltage limit Uₗ and the upper voltage limit Uᵤ on the basis of the measured voltage values stored in the memory unit 23.

As the lower and upper voltage limits Uₗ, Uᵤ (i.e. the voltage band) now are established, the control unit 15 can initiate the control of the heater 13.

In block 105, the control unit 15 determines whether the instant line input voltage Ui is above or below the upper voltage limit Uᵤ, which was determined in block 103. If the line input voltage Ui currently is above the upper voltage limit Uᵤ, the control unit 15 proceeds to block 107. In block 107, it is determined whether the energy level Et of the water tank 11 is above or below the maximum energy level Eₘₐₓ. If the energy level is below this maximum level, it means that the water heater assembly 10 is able to receive power, and it will do so since the voltage is "too high". I.e., the voltage is above a normal value, and the water heater assembly 10 thus alleviates this by receiving some of the power, by moving to block 109. However, if the energy level is or becomes too high, i.e. above the maximum energy level Eₘₐₓ, the control unit will not run the heater 13, moving to block 111.

Reverting to block 105, if the instant, measured line input voltage Ui is below the upper voltage limit Uᵤ, it means that the voltage is either in the normal range, i.e. the said voltage band, or below the voltage band (below the lower voltage limit Uₗ). The control unit 15 then determines, in block 113, if the instant line input voltage is above the lower voltage limit Uₗ. If it is, the voltage is within the voltage band (i.e. a "normal" voltage) and the control unit determines in block 115 if the energy level Et is above or below the normal energy level Eₙₒᵣₘ. If the energy level Et is below the normal energy level Eₙₒᵣₘ, then the control unit 15 runs the heater (block 109). If, however, the energy level Et is above the normal energy level Eₙₒᵣₘ, the heater is not run, indicated with block 111.

In other words, in a situation where the instant voltage Ui is within the said voltage band (voltage is "normal"), the heater 13 is run if the energy level is between lower energy level Eₘᵢₙ and the normal energy level Eₙₒᵣₘ. Moreover, with the same voltage situation, i.e. voltage being within the voltage band, the heater 13 is not run if the energy level is between the normal energy level Eₙₒᵣₘ and the upper energy level Eₘₐₓ.

Still referring to the flow-chart shown in Fig. 6. If, in block 113, the control unit 15 determines that the instant voltage Ui is below the lower voltage limit Uₗ, then the control unit 15 determines in block 117 if the energy level Et in the water tank 11 is above or below the minimum energy level Eₘᵢₙ. If the energy level is below the minimum energy level Eₘᵢₙ, the control unit 15 runs the heater 13 in block 109. Hence, the control unit 15 will run the heater 13 regardless of the measured instant voltage if the energy level Et of the water tank drops below the minimum energy level Eₘᵢₙ. If the control unit 15 determines in block 117 that the energy level is above the minimum energy level Eₘᵢₙ, it will not run the heater 13. In this manner, the control unit 15 can be said to be reluctant to run the heater 13 in situations where the voltage is low, i.e. below the lower voltage level Ui.

Reference is again made to Fig. 2. In this embodiment, the control unit 15 comprises a delay unit 22. The delay unit 22 provides a time delay before running the heater 13. The delay unit 22 may be set with a predetermined delay time. The delay times for various water heater assemblies 10 will typically be different, thus ensuring that not every heater 13 of the various water heater assemblies 10 are turned on or off at the same instant.

In some embodiments though, the time delay used is randomized, typically between an upper and lower delay value. For instance, the time delay can be a random period of time between zero seconds (i.e. no time delay) and three minutes.

Thus, in a situation where a plurality of water heater assemblies 10 connected to the same supply line 1 experience identical or at least similar situations, the time delays, either randomized or pre-set, will ensure that they do not switch on or off their heaters 13 simultaneously.

While it may be practical to incorporate the randomized delay unit 22 with the control unit 15, the skilled person will appreciate that one may also obtain this function with an external delay unit. As indicated above, the delay unit 22 can be used both when switching on and when switching off the heater 13.

Also shown in Fig. 2 is a price-optimalisation unit 24. The control unit 15 can be configured to, when the line input voltage Ui is between the lower voltage limit Uₗ and the upper voltage limit Uᵤ, run the heater 13 based on input from the price-optimalisation unit 24. In this manner, the user or owner of the water heater assembly is enabled to automatically consume electric power when the price is low.

Immediately after installation of the water heater assembly 10, or after resetting the control unit 15, the control unit 15 can typically operate based on preset parameters. Then, after having obtained a set of measured energy levels Et and a set of measured values of the input line voltage Ui, the control 15 can instead calculate new parameters.

## Claims

1. A method of controlling a heater (13) of a water heater assembly (10) that comprises a water tank (11) and the heater (13), the method comprising the following steps:
a) with a voltage meter (21), monitoring an input line voltage (Ui);
**characterized in** further comprising the following steps:
b) with an energy level monitoring arrangement (30), monitoring an energy level (Eₜ) of the water tank (11);
c) with a control unit (15), determining whether the input line voltage (Uᵢ) is
- above an upper voltage limit (Uᵤ);
- between a lower voltage limit (Uₗ) and the upper voltage limit (Uᵤ); or
- below the lower voltage limit (Ui);
d) with the control unit (15), determining whether the energy level (Eₜ) is
- above a maximum energy level (Eₘₐₓ);
- between a normal energy level (Eₙₒᵣₘ) and the maximum energy level (Eₘₐₓ);
- between a minimum energy level (Eₘᵢₙ) and the normal energy level (Eₙₒᵣₘ); or
- below the minimum energy level (Eₘᵢₙ);
and then,
e) based on the monitoring and determinations in steps a) to d), run the heater (13) if
i) the measured line input voltage (Uᵢ) is above an upper voltage limit (Uᵤ) and the energy level (Eₜ) is below a maximum energy level (Eₘₐₓ);
ii) the measured line input voltage (Uᵢ) is between a lower voltage limit (Uₗ) and the upper voltage limit (Uᵤ), and the energy level (Eₜ) is below a normal energy level (Eₙₒᵣₘ);
iii) the energy level (Eₜ) is below a minimum energy level (Eₘᵢₙ);
and refrain from running the heater (13) if
iv) the energy level (Eₜ) is above the maximum energy level (Eₘₐₓ);
v) the measured input line voltage (Uᵢ) is between the lower voltage limit (Uᵢ) and the upper voltage limit (Uᵤ), and the energy level is above the normal energy level (Eₙₒᵣₘ);
vi) the measured input line voltage (Uᵢ) is below the lower voltage limit (Uₗ) and the energy level (Eₜ) is above the minimum energy level (Eₘᵢₙ).

2. A method according to claim 1, wherein the method further comprises
f) with a voltage meter (21), performing a plurality of line voltage measurements over time;
g) storing a plurality of line voltage measurement values in a memory unit (23);
h) with a calculation unit (25), calculating, based on the plurality of line voltage measurement values, the lower voltage limit (Uₗ) and the upper voltage limit (Uᵤ).

3. A method according to claim 1 or claim 2, wherein the method further comprises
j) with the energy level monitoring arrangement (30), performing a plurality of energy level measurements over time;
k) storing a plurality of energy level measurement values in a memory unit (23);
l) with a calculation unit (25), calculating, based on the plurality of energy level measurement values, the normal energy level (Eₙₒᵣₘ) and the minimum energy level (Eₘᵢₙ).

4. A method according to one of the preceding claims, wherein step e) further comprises, with a delay unit (22), delaying the switching from non-running modes (iv, v, vi) where the heater (13) is not run, to running modes (i, ii, iii) where the heater is run.

5. A water heater assembly (10) comprising
- a water tank (11) configured to accommodate heated water;
- a heater (13) configured to heat water inside the water tank (11);
- a control unit (15), and a line input voltage meter (21);
**characterized in** further comprising an energy level monitoring arrangement configured to measure the energy level (Et) of the water tank and
wherein the control unit (15) is configured to run the heater (13) when
i) the measured line input voltage (Uᵢ) is above an upper voltage limit (Uᵤ) and the energy level (Eₜ) is below a maximum energy level (Eₘₐₓ);
ii) the measured line input voltage (Uᵢ) is between a lower voltage limit (Uₗ) and the upper voltage limit (Uᵤ), and the energy level (Eₜ) is below a normal energy level (Eₙₒᵣₘ);
iii) the energy level (Eₜ) is below a minimum energy level (Eₘᵢₙ);
and that the control unit (15) is configured to refrain from running the heater (13) when
iv) the energy level (Eₜ) is above the maximum energy level (Eₘₐₓ);
v) the measured input line voltage (Uᵢ) is between the lower voltage limit (Uₗ) and the upper voltage limit (Uᵤ), and the energy level is above the normal energy level (Eₙₒᵣₘ);
vi) the measured input line voltage (Uᵢ) is below the lower voltage limit (Uᵢ) and the energy level (Eₜ) is above the minimum energy level (Eₘᵢₙ).

6. A water heater assembly (10) according to claim 5, wherein it further comprises a memory unit (23) and a calculation unit (25), wherein
- the memory unit (23) is configured to store a set of measured voltage values;
- the calculation unit (25) is configured to, based on the set of measured voltage values, calculate the lower voltage limit (Uₗ) and the upper voltage limit (Uᵤ), wherein the calculated values of the lower and upper voltage limits (Uₗ, Uᵤ) are dependent on the set of measured voltage values.

7. A water heater assembly (10) according to claim 5 or claim 6, wherein it further comprises a delay unit (22), configured to delay the switching on and/or the switching off of the heater (13).

8. A water heater assembly (10) according to one of claims 5 to 7, wherein it further comprises a price-optimalisation unit (24) and that the control unit (15) is configured to, when the line input voltage (Uᵢ) is between the lower voltage limit (Uᵢ) and the upper voltage limit (Uᵤ), run the heater (13) based on input from the price-optimalisation unit (24).

## Patentansprüche

1. Verfahren zur Steuerung eines Heizers (13) einer Wasserheizeranordnung (10), die einen Wassertank (11) und den Heizer (13) umfasst, wobei das Verfahren die folgenden Schritte umfasst:
a) Überwachen einer Netzeingangsspannung (Uᵢ) mit einem Spannungsmessgerät (21);
**dadurch gekennzeichnet, dass** das Verfahren weiter die folgenden Schritte umfasst:
b) Überwachen eines Energieniveaus (Eₜ) des Wassertanks (11) mit einer Anordnung zur Überwachung des Energieniveaus (30);
c) mit einer Steuereinheit (15) feststellen, ob die Netzeingangsspannung (Uᵢ)
- über einer oberen Spannungsgrenze (Uᵤ);
- zwischen einer unteren Spannungsgrenze (Uₗ) und der oberen Spannungsgrenze (Uᵤ); oder
- unter der unteren Spannungsgrenze (Uₗ) liegt;
d) mit der Steuereinheit (15) feststellen, ob das Energieniveau (Eₜ)
- über einem maximalen Energieniveau (Eₘₐₓ);
- zwischen einem normalen Energieniveau (Eₙₒᵣₘ) und dem maximalen Energieniveau (Eₘₐₓ);
- zwischen einem minimalen Energieniveau (Eₘᵢₙ) und dem normalen Energieniveau (Eₙₒᵣₘ); oder
- unter dem minimalen Energieniveau (Eₘᵢₙ) liegt;
und dann,
e) auf der Grundlage der Überwachung und Bestimmungen in den Schritten a) bis d), Betreiben des Heizers (13), wenn
i) die gemessene Netzeingangsspannung (Uᵢ) über einer oberen Spannungsgrenze (Uᵤ) liegt und das Energieniveau (Eₜ) unter einem maximalen Energieniveau (Eₘₐₓ) liegt;
ii) die gemessene Netzeingangsspannung (Uᵢ) zwischen einer unteren Spannungsgrenze (Uₗ) und der oberen Spannungsgrenze (Uᵤ) liegt und das Energieniveau (Eₜ) unter einem normalen Energieniveau (Eₙₒᵣₘ) liegt;
iii) das Energieniveau (Eₜ) unter einem minimalen Energieniveau (Eₘᵢₙ) liegt;
und den Heizer (13) nicht betreiben, wenn
iv) das Energieniveau (Eₜ) über dem maximalen Energieniveau (Eₘₐₓ) liegt;
v) die gemessene Netzeingangsspannung (Uᵢ) zwischen der unteren Spannungsgrenze (Uₗ) und der oberen Spannungsgrenze (Uᵤ) liegt und das Energieniveau über dem normalen Energieniveau (Eₙₒᵣₘ) liegt;
vi) die gemessene Netzeingangsspannung (Uᵢ) unter der unteren Spannungsgrenze (Uₗ) liegt und das Energieniveau (Eₜ) über dem minimalen Energieniveau (Eₘᵢₙ) liegt.

2. Verfahren nach Anspruch 1, wobei das Verfahren weiter Folgendes umfasst
f) mit einem Spannungsmessgerät (21), Durchführen einer Vielzahl von Netzeingangsspannungsmessungen über die Zeit;
g) Speichern einer Vielzahl von Netzeingangsspannungsmesswerten in einer Speichereinheit (23);
h) mit einer Berechnungseinheit (25), Berechnen der unteren Spannungsgrenze (Uₗ) und der oberen Spannungsgrenze (Uᵤ) auf der Grundlage der Vielzahl von Netzeingangsspannungsmesswerten.

3. Verfahren nach Anspruch 1 oder Anspruch 2, wobei das Verfahren weiter Folgendes umfasst
j) mit der Anordnung zur Überwachung des Energieniveaus (30), Durchführen einer Vielzahl von Energieniveaumessungen über die Zeit;
k) Speichern einer Vielzahl von Energieniveaumesswerten in einer Speichereinheit (23);
l) mit einer Berechnungseinheit (25), Berechnen des normalen Energieniveaus (Eₙₒᵣₘ) und des minimalen Energieniveaus (Eₘᵢₙ) auf der Grundlage der Vielzahl von Energieniveaumesswerten.

4. Verfahren nach einem der vorstehenden Ansprüche, wobei Schritt e) weiter umfasst, mit einer Verzögerungseinheit (22), das Verzögern des Umschaltens von Nichtbetriebsmodi (iv, v, vi), in denen der Heizer (13) nicht betrieben wird, auf Betriebsmodi (i, ii, iii), in denen der Heizer betrieben wird.

5. Wasserheizeranordnung (10), umfassend
- einen Wassertank (11), der ausgebildet ist, erhitztes Wasser aufzunehmen;
- einen Heizer (13), der ausgebildet ist, Wasser innerhalb des Wassertanks (11) zu erhitzen;
- eine Steuereinheit (15) und ein Netzeingangsspannungsmessgerät (21); **dadurch gekennzeichnet, dass** die Wasserheizeranordnung weiter eine Anordnung zur Überwachung des Energieniveaus umfasst, die ausgebildet ist, das Energieniveau (Et) des Wassertanks zu messen, und
wobei die Steuereinheit (15) ausgebildet ist, den Heizer (13) zu betreiben, wenn
i) die gemessene Netzeingangsspannung (Uᵢ) über einer oberen Spannungsgrenze (Uᵤ) liegt und das Energieniveau (Eₜ) unter einem maximalen Energieniveau (Eₘₐₓ) liegt;
ii) die gemessene Netzeingangsspannung (Uᵢ) zwischen einer unteren Spannungsgrenze (Uₗ) und der oberen Spannungsgrenze (Uᵤ) liegt und das Energieniveau (Eₜ) unter einem normalen Energieniveau (Eₙₒᵣₘ) liegt;
iii) das Energieniveau (Eₜ) unter einem minimalen Energieniveau (Eₘᵢₙ) liegt;
und dass die Steuereinheit (15) ausgebildet ist, den Heizer (13) nicht zu betreiben, wenn
iv) das Energieniveau (Eₜ) über dem maximalen Energieniveau (Eₘₐₓ) liegt;
v) die gemessene Netzeingangsspannung (Uᵢ) zwischen der unteren Spannungsgrenze (Uₗ) und der oberen Spannungsgrenze (Uᵤ) liegt und das Energieniveau über dem normalen Energieniveau (Eₙₒᵣₘ) liegt;
vi) die gemessene Netzeingangsspannung (Uᵢ) unter der unteren Spannungsgrenze (Uₗ) liegt und das Energieniveau (Eₜ) über dem minimalen Energieniveau (Eₘᵢₙ) liegt.

6. Wasserheizeranordnung (10) nach Anspruch 5, wobei sie weiter eine Speichereinheit (23) und eine Berechnungseinheit (25) umfasst, wobei
- die Speichereinheit (23) ausgebildet ist, einen Satz gemessener Spannungswerte zu speichern;
- die Berechnungseinheit (25) ausgebildet ist, auf der Grundlage des Satzes gemessener Spannungswerte die untere Spannungsgrenze (Uₗ) und die obere Spannungsgrenze (Uᵤ) zu berechnen, wobei die berechneten Werte der unteren und der oberen Spannungsgrenzen (Uₗ, Uᵤ) von dem Satz gemessener Spannungswerte abhängig sind.

7. Wasserheizeranordnung (10) nach Anspruch 5 oder Anspruch 6, wobei sie weiter eine Verzögerungseinheit (22) umfasst, die ausgebildet ist, das Einschalten und/oder das Ausschalten des Heizers (13) zu verzögern.

8. Wasserheizeranordnung (10) nach einem der Ansprüche 5 bis 7, wobei sie weiter eine Preisoptimierungseinheit (24) umfasst und wobei die Steuereinheit (15) ausgebildet ist, wenn die Netzeingangsspannung (Uᵢ) zwischen der unteren Spannungsgrenze (Uₗ) und der oberen Spannungsgrenze (Uᵤ) liegt, den Heizer (13) auf der Grundlage von Eingaben von der Preisoptimierungseinheit (24) zu betreiben.

## Revendications

1. Procédé de commande d'un dispositif de chauffage (13) d'un ensemble chauffe-eau (10) qui comprend un réservoir d'eau (11) et le dispositif de chauffage (13), le procédé comprenant les étapes suivantes :
a) à l'aide d'un voltmètre (21), la surveillance d'une tension d'entrée de ligne (Uᵢ) ;
**caractérisé en ce qu'**il comprend en outre les étapes suivantes :
b) à l'aide d'un agencement de surveillance du niveau d'énergie (30), la surveillance d'un niveau d'énergie (Eₜ) du réservoir d'eau (11) ;
c) à l'aide d'une unité de commande (15), le fait de déterminer si la tension d'entrée de ligne (Uᵢ) est
- au-dessus d'une limite supérieure de tension (Uᵤ) ;
- entre une limite inférieure de tension (Uₗ) et la limite supérieure de tension (Uᵤ) ; ou
- au-dessous de la limite inférieure de tension (Uₗ) ;
d) à l'aide de l'unité de commande (15), le fait de déterminer si le niveau d'énergie (Eₜ) est
- au-dessus d'un niveau maximal d'énergie (Eₘₐₓ) ;
- entre un niveau normal d'énergie (Eₙₒᵣₘ) et le niveau maximal d'énergie (Eₘₐₓ) ;
- entre un niveau minimal d'énergie (Eₘᵢₙ) et le niveau normal d'énergie (Eₙₒᵣₘ) ; ou
- au-dessous du niveau minimal d'énergie (Eₘᵢₙ) ;
et ensuite,
e) sur la base de la surveillance et des déterminations des étapes a) à d), la mise en route du dispositif de chauffage (13) si
i) la tension d'entrée de ligne (Uᵢ) mesurée est au-dessus d'une limite supérieure de tension (Uᵤ) et le niveau d'énergie (Eₜ) est au-dessous d'un niveau maximal d'énergie (Eₘₐₓ) ;
ii) la tension d'entrée de ligne (Uᵢ) mesurée est entre une limite inférieure de tension (Uₗ) et la limite supérieure de tension (Uᵤ), et le niveau d'énergie (Eₜ) est au-dessous d'un niveau normal d'énergie (Eₙₒᵣₘ) ;
iii) le niveau d'énergie (Eₜ) est au-dessous d'un niveau minimal d'énergie (Eₘᵢₙ) ;
et la non-mise en route du dispositif de chauffage (13) si
iv) le niveau d'énergie (Eₜ) est au-dessus du niveau maximal d'énergie (Eₘₐₓ) ;
v) la tension d'entrée de ligne (Uᵢ) mesurée est entre la limite inférieure de tension (Uₗ) et la limite supérieure de tension (Uᵤ), et le niveau d'énergie est au-dessus du niveau normal d'énergie (Eₙₒᵣₘ) ;
vi) la tension d'entrée de ligne (Uᵢ) mesurée est au-dessous de la limite inférieure de tension (Uₗ) et le niveau d'énergie (Eₜ) est au-dessus du niveau minimal d'énergie (Eₘᵢₙ).

2. Procédé selon la revendication 1, dans lequel le procédé comprend en outre
f) à l'aide d'un voltmètre (21), la réalisation d'une pluralité de mesures de tension de ligne au cours du temps ;
g) le stockage d'une pluralité de valeurs de mesure de tension de ligne dans une unité de mémoire (23) ;
h) à l'aide d'une unité de calcul (25), le calcul, sur la base de la pluralité de valeurs de mesure de tension de ligne, de la limite inférieure de tension (Uₗ) et de la limite supérieure de tension (Uᵤ).

3. Procédé selon la revendication 1 ou la revendication 2, dans lequel le procédé comprend en outre
j) à l'aide de l'agencement de surveillance du niveau d'énergie (30), la réalisation d'une pluralité de mesures de niveau d'énergie au cours du temps ;
k) le stockage d'une pluralité de valeurs de mesure de niveau d'énergie dans une unité de mémoire (23) ;
l) à l'aide d'une unité de calcul (25), le calcul, sur la base de la pluralité de valeurs de mesure de niveau d'énergie, du niveau normal d'énergie (Eₙₒᵣₘ) et du niveau minimal d'énergie (Eₘᵢₙ).

4. Procédé selon l'une des revendications précédentes, dans lequel l'étape e) comprend en outre, à l'aide d'une unité de retardement (22), le retardement du passage depuis des modes de non-fonctionnement (iv, v, vi) dans lesquels le dispositif de chauffage (13) n'est pas mis en route, vers des modes de fonctionnement (i, ii, iii) dans lesquels le dispositif de chauffage est mis en route.

5. Ensemble chauffe-eau (10) comprenant
- un réservoir d'eau (11) configuré pour recevoir de l'eau chauffée ;
- un dispositif de chauffage (13) configuré pour chauffer l'eau à l'intérieur du réservoir d'eau (11) ;
- une unité de commande (15), et un voltmètre (21) d'entrée de ligne ;
**caractérisé en ce qu'**il comprend en outre un agencement de surveillance du niveau d'énergie configuré pour mesurer le niveau d'énergie (Et) du réservoir d'eau et
dans lequel l'unité de commande (15) est configurée pour mettre en route le dispositif de chauffage (13) lorsque
i) la tension d'entrée de ligne (Uᵢ) mesurée est au-dessus d'une limite supérieure de tension (Uᵤ) et le niveau d'énergie (Eₜ) est au-dessous d'un niveau maximal d'énergie (Eₘₐₓ) ;
ii) la tension d'entrée de ligne (Uᵢ) mesurée est entre une limite inférieure de tension (Uₗ) et la limite supérieure de tension (Uᵤ), et le niveau d'énergie (Eₜ) est au-dessous d'un niveau normal d'énergie (Eₙₒᵣₘ) ;
iii) le niveau d'énergie (Eₜ) est au-dessous d'un niveau minimal d'énergie (Eₘᵢₙ) ;
et **en ce que** l'unité de commande (15) est configurée pour ne pas mettre en route le dispositif de chauffage (13) lorsque
iv) le niveau d'énergie (Eₜ) est au-dessus du niveau maximal d'énergie (Eₘₐₓ) ;
v) la tension d'entrée de ligne (Uᵢ) mesurée est entre la limite inférieure de tension (Uₗ) et la limite supérieure de tension (Uᵤ), et le niveau d'énergie est au-dessus du niveau normal d'énergie (Eₙₒᵣₘ) ;
vi) la tension d'entrée de ligne (Uᵢ) mesurée est au-dessous de la limite inférieure de tension (Uₗ) et le niveau d'énergie (Eₜ) est au-dessus du niveau minimal d'énergie (Eₘᵢₙ).

6. Ensemble chauffe-eau (10) selon la revendication 5, dans lequel il comprend en outre une unité de mémoire (23) et une unité de calcul (25), dans lequel
- l'unité de mémoire (23) est configurée pour stocker un ensemble de valeurs de tension mesurées ;
- l'unité de calcul (25) est configurée pour, sur la base de l'ensemble de valeurs de tension mesurées, calculer la limite inférieure de tension (Uₗ) et la limite supérieure de tension (Uᵤ), dans lequel les valeurs calculées des limites inférieure et supérieure de tension (Uₗ, Uᵤ) dépendent de l'ensemble de valeurs de tension mesurées.

7. Ensemble chauffe-eau (10) selon la revendication 5 ou la revendication 6, dans lequel il comprend en outre une unité de retardement (22), configurée pour retarder la mise en route et/ou l'arrêt du dispositif de chauffage (13).

8. Ensemble chauffe-eau (10) selon l'une des revendications 5 à 7, dans lequel il comprend en outre une unité d'optimisation tarifaire (24) et l'unité de commande (15) est configurée pour, lorsque la tension d'entrée de ligne (Uᵢ) est entre la limite inférieure de tension (Uₗ) et la limite supérieure de tension (Uᵤ), mettre en route le dispositif de chauffage (13) sur la base d'une entrée provenant de l'unité d'optimisation tarifaire (24).
